# EUROPEAN PATENT APPLICATION

(11) **EP 4 697 142 A1**
(43) Date of publication of application: **18.02.2026**
(21) Application number: 24194099.8
(22) Date of filing: 12.08.2024
(51) Int. Cl.: G06F 3/01, G06F 3/03, G06F 3/04815, G06F 3/04845

(54) **TOUCHLESS INTERACTION AMONG PHYSICAL OBJECTS AND VIRTUAL OBJECTS**

(71) Applicant: AMERIA AG, 69124 Heidelberg (DE)
(72) Inventor: Vilkhovyi, Ihor, 69221 Dossenheim (DE)
(74) Representative: Best, Bastian

(57) **Abstract**

According to a first aspect of the present invention, it may be provided a method for touchless interaction among physical objects and virtual objects. The method may be computer-implemented. The method may be performed by a first electronic device. The method may comprise obtaining, using a first touchless interaction system comprising first sensor means, first sensor data associated with a first physical input object. Movement and shape of the first physical input object may be continuously captured by the first sensor means and may be included in the first sensor data. The first physical input object may be a user's hand. The method may comprise generating, based on the first sensor data, a first virtual representation of the first physical input object based on a first point cloud and/or first voxel cloud. The method may comprise displaying, using a first display means, the first virtual representation and at least one virtual object. Movement and shape of the virtual representation may correspond to the movement and shape of the first physical input object. The method may comprise, in response to an interaction, in particular including a contact, between the first virtual representation and the at least one virtual object, causing a movement and/or a shape change of the at least one virtual object. Causing a movement and/or a shape change may be performed based on an inter-action set of rules.

## Description

### TECHNICAL FIELD

The present disclosure relates to interactive computer systems and methods for user interaction. Specifically, the present disclosure pertains to a method for touchless interaction among virtualized physical objects and virtual objects, in particular virtualized physical objects and purely virtual objects. Further, the present disclosure relates to a corresponding data processing apparatus and a computer program.

### BACKGROUND

In the field of human-computer interaction, it is common to employ touch-based interfaces such as touchscreens and touchpads. These interfaces allow users to interact with digital content by physically touching the display or input surface. While touch-based systems have become ubiquitous, they have inherent limitations, including issues related to hygiene, limited interaction dimensions, physical wear and tear on the devices, and user experience and health.

Known systems may involve the use of touch-sensitive surfaces or devices equipped with haptic feedback mechanisms to simulate physical interactions. The accuracy and responsiveness of these systems can be affected by factors such as the user's touch pressure and the surface condition of the touch-sensitive area.

Despite the substantial advances in the field of touch-based interaction, there remains a need for more advanced and versatile interaction methods that do not rely on physical contact. Touchless interaction systems have emerged as a promising alternative, allowing users to interact with virtual objects through gestures and movements without the need for direct contact. However, existing touchless systems often face challenges related to accurately capturing and interpreting complex gestures, as well as providing realistic and responsive feedback to the user and the high need of computational resources and energy.

Current touchless interaction systems typically utilize sensor technologies such as cameras or ultrasound to capture and estimate the pose of a user's hand including movements. These systems usually have a relatively high computational resource and energy consumption and at the same time not providing sufficient accuracy and realism of an interaction.

Moreover, existing touchless interaction systems often lack the ability to provide realistic feedback in response to interactions between virtual objects. For example, simulating the physical properties of virtual objects, such as momentum, deformation, and surface forces, can be computationally intensive and challenging to implement in real-time. As a result, users may experience a disconnect, i.e., latency, between their actual physical movements and the corresponding virtual interactions, reducing the overall effectiveness and immersion of the system.

It is therefore a technical problem underlying the present invention to provide a method for touchless interaction among physical objects and virtual objects that at least partially overcomes the disadvantages of known systems.

### SUMMARY OF THE INVENTION

The problem is solved by the subject-matter defined in the independent claims. Advantageous modifications of embodiments of the invention are defined in the dependent claims as well as in the description and the figures.

According to a first aspect of the present invention, it may be provided a method for touchless interaction among physical objects and virtual objects. The method may be computer-implemented. The method may be performed by a first electronic device. The method may comprise obtaining, using a first touchless interaction system comprising first sensor means, first sensor data associated with a first physical input object. Movement and shape of the first physical input object may be continuously captured by the first sensor means, and/or may be included in the first sensor data. The first physical input object may be a user's hand. The method may comprise generating, based on the first sensor data, a first virtual representation of the first physical input object based on a first point cloud and/or first voxel cloud. The first point cloud and/or first voxel cloud may be derived from or included in the first sensor data. The method may comprise displaying, using a first display means, the first virtual representation and at least one virtual object. Movement and shape of the virtual representation may correspond to the movement and shape of the first physical input object. The method may comprise, in response to an interaction, in particular including a contact, between the first virtual representation and the at least one virtual object, causing a movement and/or a shape change of the at least one virtual object. Causing a movement and/or a shape change may be performed based on an inter-action set of rules.

The virtual object may be a 2D object or a 3D object. In case of a 2D virtual object, visual 3D effects may be added, e.g., a bouncing text portion such as a hyperlink, wherein visual 3D effects may be added depending on a proximity or pointing direction of the first physical input object and correspondingly of the first virtual representation. For example, the first physical input object and correspondingly the first virtual representation may point at a particular 2D virtual object, such as a text portion of a displayed text, wherein the text portion gets temporarily zoomed in. Generally, for the purpose of adding visual effects to virtual objects, it may be provided that a displayed scene is at least partially overlayed by a copy view of the displayed scene, wherein the virtual effects are added in the copy view. The copy view may essentially correspond to the scene and may be generated by a computer application for the purpose of adding visual effects and thus indirectly allowing a more immersive user interaction with the actual content of the scene.

Throughout the present disclosure, the term "touchless" should be understood in relation to the electronic device or computer device. This means that a touchless interaction or a touchless user input does not necessarily mean that the user does not touch any objects or components of the electronic device or computer device in general, but that for the specific desired user interaction or user input, no touching of an input device intended for this purpose is required.

Touchless interaction may be facilitated through the use of sensor means that detect and interpret user movements and gestures. The sensor means may capture data related to the user's physical actions, which is then processed to generate corresponding virtual actions. Specific examples of touchless interaction may include gesture recognition systems, where hand movements are translated into commands, and motion tracking technologies, which monitor the user's body movements to control virtual objects.

Throughout the present disclosure, the term "electronic device" may refer to hardware facilitating the method. This hardware may be a computer device or may be connected to a computer device which may centrally control the procedure. The electronic device may include components such as processors, memory, sensors, and display units. Specific examples of electronic devices may include hardware arrangements including a display means and a touchless interaction system, computer devices, laptops, smartphones, tablets, and specialized hardware like virtual promoters or gaming machines. In some cases, the electronic device may be part of a larger system, connected to a central computer that manages and processes the interaction.

Throughout the present disclosure, the term "touchless interaction system" may refer to a hardware and software combination that enables an electronic device to recognize and interpret physical gestures carried out by a user without direct touch. This system may include, for example, cameras, infrared sensors, and other types of motion detection sensors that are capable of detecting the movement of a user's body parts in free space.

For that, the touchless interaction system preferably includes or consists of sensor means. The sensor means may include one or more sensor devices. Groups of the one or more sensor devices may build a sensor array. An exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total. Further, it may be included a 2D RGB camera for adding color information to the sensor data. It may be provided that 3D image data obtained by 3D camera(s) are combined by 2D RGB image data obtained by a 2D RGB camera. By this, a colored 3D model of the physical input object may be provided making up the virtual representation.

The sensor means may in particular be 3D imaging sensor means which may include sensor devices that are, alone or in combination with other sensor devices, capable of capturing three-dimensional images of an environment, in particular of objects such as a user's hand being the physical input object. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The touchless interaction system may be configured to observe an interaction space comprising or being a 3D space in the nearfield of the electronic device in which the user may provide interaction input, i.e., free-space hand movement. The space may be a space between the user and the electronic device, in particular the display means. Generally, the interaction space may be within or equal to the field of view of the sensor means. The interaction space may have a spatial orientation and/or location that is particularly convenient for the user person for providing touchless interaction, i.e., free-space hand movements. It may be provided that the user is provided with a control option to adjust the spatial orientation and/or location of the interaction space.

The touchless interaction system may receive, in particular from sensor means, sensor data, i.e., data collected by sensor means. The sensor means may preferably include at least one imaging sensor device, as mentioned above, thus in this case, the sensor data includes image data. In a preferred embodiment, the sensor means is configured to capture a 3D image of an interaction space. The 3D image may be generated based on layering various sensor data from different sensor devices. In particular, the sensor means may include a depth sensor, such as at least one infrared sensor, facilitating creation of the 3D image. Said captured sensor data may be processed by the electronic device or computer device in order to generate the virtual representation behaving corresponding to the physical input object which may be the user's hand observed by the touchless interaction system.

Throughout the present disclosure, the term "sensor means" may refer to the components of the touchless interaction system that capture data related to the physical input object. These sensors may include various types of devices capable of detecting different aspects of the physical input object, such as its position, movement, and shape. Specific examples of sensor means may include depth sensors that capture 3D spatial data, infrared cameras that detect heat signatures and movements, and motion capture systems that use multiple cameras to track the precise movements of an object. The sensor means may work in conjunction with software algorithms to process the captured data and generate corresponding virtual representations. The sensor means, in a preferred embodiment, may include at least one 3D camera providing the point cloud and/or voxel cloud and may include at least one 2D color camera, in particular 2D RGB camera, for adding color information to the point cloud and/or voxel cloud. All together may be included in the sensor data facilitating generating the virtual representation of the physical input object.

The "sensor data" may include data captured by the sensor means, representing the movement and shape of the physical input object. This data may be in various formats, such as point clouds, voxel data, or 3D coordinates, depending on the type of sensors used. Specific examples of sensor data may include a series of 3D coordinates representing the position of the physical input object over time, a point cloud and/or voxel cloud generated by a depth camera showing the contours of an object, or the volume and shape of the physical input object. The sensor data may be processed in real-time to generate virtual representations and facilitate touchless interactions.

Throughout the present disclosure, the term "physical input object" may refer to the object whose movement and shape are being captured by the sensor means. This object may be any part of the user's body or any other physical item used to interact with the touchless interaction system. Specific examples of physical input objects may include a user's hand, finger, or any other body part, such as an arm or head. In some cases, the physical input object may also include handheld items like a stylus or a tool, which are used to interact with the virtual environment.

Throughout the present disclosure, the term "movement and shape of the physical input object" may refer to the dynamic and static characteristics of the physical input object as detected by the sensor means. Movement may include any changes in the position or orientation of the physical input object over time, while shape may refer to the contours, dimensions, and overall form of the object. Specific examples may include the trajectory of a hand movement, the rotation of a finger, and the contour of a hand. The sensor means may capture these characteristics continuously to provide real-time data for generating virtual representations.

Throughout the present disclosure, the term "capture" may refer to the process of recording or obtaining data related to the physical input object using the sensor means. This process may involve detecting and measuring various attributes of the physical input object, such as its position, movement, and shape, and converting these measurements into digital data. Specific examples of capture may include the continuous recording of hand movements by a depth camera, the detection of finger gestures by an infrared sensor, and the tracking of body movements by a motion capture system. The captured data may be used to generate virtual representations and facilitate touchless interactions.

Throughout the present disclosure, the term "point cloud" may refer to a set of data points in space representing the physical input object. Each data point in the point cloud may have coordinates in a 3D space, typically represented by x, y, and z values. Point clouds may be generated by depth sensors or 3D cameras and provide a detailed spatial representation of the physical input object. Specific examples may include 3D coordinates captured by a depth camera, where each point corresponds to a specific location on the surface of the object. Point clouds may be used to create accurate digital models of physical objects, which can then be manipulated in a virtual environment.

Throughout the present disclosure, the term "voxel cloud" may include a volumetric representation of the physical input object, composed of voxels. Voxels, or volumetric pixels, are the 3D equivalent of pixels and represent values on a regular grid in three-dimensional space. A voxel cloud provides a detailed volumetric representation of the physical input object, capturing not only its surface but also its internal structure. Specific examples may include voxel data generated from depth sensor data, where each voxel represents a small volume of the physical object. Voxel clouds may be used for applications requiring detailed volumetric information, such as medical imaging, 3D modeling, and virtual reality.

Throughout the present disclosure, the term "virtual object" may include any digital object displayed by the display means, e.g., alongside the virtual representation. Virtual objects may be interactive elements within the virtual environment, allowing the user to manipulate or interact with them using the touchless interaction system. Specific examples may include 3D models of geometric elements, which can be rotated, scaled, or moved within the virtual space. Virtual objects may be designed to mimic real-world objects or may represent entirely digital constructs.

Throughout the present disclosure, the term "contact" may refer to an interaction where the virtual representation of the physical input object comes into proximity or intersects with a virtual object. Contact may be detected based on the spatial relationship between the virtual representation and the virtual object, triggering specific actions or responses within the virtual environment. Specific examples may include a virtual hand, i.e., a virtual representation of a user's hand being the physical input object, touching a virtual object, causing the virtual object to be moved, sliced, deformed, squeezed, and/or the like. Said contact may also trigger a specific action of the electronic device and/or computer device, e.g., starting an application.

Throughout the present disclosure, the term "inter-action set of rules" may refer to the predefined rules governing the interaction between the virtual representation and the virtual objects. These rules may define how virtual objects respond to contact or proximity with the virtual representation, ensuring consistent and realistic behavior within the virtual environment. Specific examples may include rules for collision detection, which determine when and how virtual objects collide with each other; force application, which simulates physical forces such as gravity, friction, or elasticity acting on the virtual objects; and object deformation, which defines how virtual objects change shape in response to interactions, such as bending, stretching, or compressing. The inter-action set of rules may be implemented using algorithms and mathematical models to provide a realistic and responsive user experience.

Throughout the present disclosure, the term "inter-action set of rules" may refer to the predefined rules governing the interaction between the virtual representation and the virtual objects. These rules are essential for ensuring consistent and realistic behavior within the virtual environment, providing users with an intuitive and immersive experience. The inter-action set of rules may be implemented using sophisticated algorithms and mathematical models that simulate real-world physics and interactions.

One of the primary functions of the inter-action set of rules may be collision detection. Collision detection rules determine when and how virtual objects collide with each other or with the virtual representation of the physical input object. For example, if a virtual hand representation approaches a virtual ball, the collision detection rules will identify the point of contact and trigger a response, such as causing the ball to move. This ensures that virtual objects do not pass through each other, maintaining the illusion of physical presence and solidity.

It may be provided that the virtual objects cannot trigger movement of the virtual representation of the physical input object as the physical input object may be solely controlled be the real-time capture of the physical input object in the real word, e.g., the user's hand.

Another aspect of the inter-action set of rules is force application. The rules may simulate physical forces acting on virtual objects, such as gravity, friction, and elasticity. For instance, when a virtual hand picks up a virtual object and drops ist, the force application rules may simulate falling down of the virtual object. Friction rules may determine how easily a virtual object slides across a surface, while elasticity rules may simulate the stretching or compressing of objects like virtual rubber bands. These forces add realism to the virtual environment, making interactions feel more natural and believable thereby enhancing the user experience.

Object deformation may be another component of the inter-action set of rules. Deformation rules define how virtual objects change shape in response to interactions, such as bending, stretching, compressing, squeezing, splitting and slicing. For example, if a virtual hand squeezes a virtual sponge, the deformation rules may cause the sponge to compress and change shape, mimicking the behavior of a real sponge. This allows for more dynamic and interactive virtual objects that respond realistically to user actions.

In addition to these functions, the inter-action set of rules may also include rules for object behavior and state changes. For instance, a virtual object may have rules that define its behavior when it is dropped, such as bouncing, rolling, or breaking apart. These rules ensure that virtual objects behave in a predictable and realistic manner, enhancing the overall user experience.

Furthermore, there may be intra-action set of rules that are described in more detail below. They may incorporate rules for multi-object interactions. These rules may govern how multiple virtual objects interact with each other and with the virtual representation. For example, if a virtual hand throws a virtual ball at a stack of virtual blocks, the multi-object interaction rules may determine how the blocks topple and scatter upon impact. This adds complexity and depth to the virtual environment, allowing for more intricate and engaging interactions.

Examples illustrating the inter-action set of rules are given in the following:
In a virtual playground, inter-action set of rules including multi-object interaction schemes may govern how virtual toys interact with each other. For instance, when a virtual ball is thrown at a stack of virtual blocks, the rules may determine how the blocks topple and scatter upon impact. This creates a realistic and engaging play environment, allowing users to explore and interact with multiple virtual objects simultaneously.

In a virtual kitchen environment, inter-action set of rules may ensure that virtual utensils do not pass through each other or through virtual food items. For instance, when a virtual knife cuts a virtual vegetable, the collision detection rules identify the point of contact and trigger the vegetable to split into pieces. This realistic interaction enhances the user's immersion in the virtual cooking experience.

In a virtual gym, inter-action set of rules including force application schemes may simulate the weight and resistance of virtual exercise equipment. For example, when a user lifts a virtual dumbbell, the rules may simulate the gravitational pull, requiring the user to exert effort proportional to the weight of the dumbbell. This provides a realistic workout experience, making the virtual gym more effective for fitness training.

In a virtual art studio, inter-action set of rules including deformation schemes may allow users to manipulate virtual clay. When a virtual hand presses and molds the clay, the deformation rules may cause the clay to change shape, mimicking the behavior of real clay. This enables artists to create and modify virtual sculptures with a high degree of realism and precision.

In a virtual garden, inter-action set of rules including object behavior schemes may define how virtual plants grow and respond to user actions. For example, when a virtual watering can is used to water a virtual plant, the rules may trigger the plant to grow and change state, such as blooming flowers or producing fruit. This dynamic interaction enhances the user's engagement with the virtual garden.

Throughout the present disclosure, the terms "display means" and "display" are used as synonyms. The terms include any means for presenting visual content to a user. This may include a broad range of technologies and formats, including electronic display screens, projection systems, projection surfaces, holographic systems, Augmented Reality devices, Virtual Reality devices, and/or the like.

Electronic display screens are perhaps the most common type of display means in use nowadays. These can include LCD, LED, OLED, Retina, E-Ink and other types of displays, which are used in devices ranging from laptops, smartphones and smartwatches to televisions and large format displays. These screens typically rely on backlighting or other forms of illumination to produce an image and may be capable to offer a wide range of color and resolution capabilities.

Projection systems are another type of display means, which use light to project an image onto a projection surface such as a screen or wall. These can include traditional projectors, as well as newer technologies such as laser projection and digital light processing (DLP). Projection systems are often used in settings such as movie theaters, conference rooms, and large spaces. Projection surfaces may come in various shapes, sizes, and materials, and can be used for a wide range of applications. The most common type of projection surface is a plain, preferably white, wall. It is a simple and inexpensive way to project images, videos, and presentations. Another type of projection surface is a projector screen. Projector screens are designed specifically for projection purposes. They come in various sizes and materials, such as vinyl, fabric, and glass beads. They are often used for applications where a particularly high quality of a projection is desired. Another type of projection surface is a transparent projection surface. Transparent projection surfaces are made of glass or acrylic and are often used for advertising or digital signage. They are common for storefront displays, museums and galleries where a user can see both the projection and an exhibit behind it.

Holographic display means are a type of display means which uses complex optics to produce three-dimensional images that appear to float in space. They may be used for a range of applications, including product visualization, scientific visualization, and entertainment.

Augmented Reality devices and Virtual Reality devices may comprise display means different to each other to create their respective immersive experiences. Augmented Reality devices typically use a transparent display means such as a head-mounted display (HMD) or a smart glass. These display means allow the user to see the real world while overlaying virtual objects on top of it. The virtual objects can be projected onto the transparent display means using various techniques such as beam-splitting, waveguide optics, or holographic displays. The virtual objects are then aligned with the real-world environment in real-time, creating the illusion that the virtual objects are a part of the real world. On the other hand, Virtual Reality devices typically use opaque displays such as a head-mounted display or a projection system. A Virtual Reality device, in particular the display means of a Virtual Reality device, may block out the real world and immerse the user in a virtual environment. The most common type of display means used in Virtual Reality devices is a high-resolution LCD or OLED screen.

The proposed method for touchless interaction among physical objects and virtual objects involves a multitude of technical advantages that significantly enhance user experience and broaden the scope of applications. One of the primary benefits is the improvement in user experience. By enabling touchless interaction, users can engage with virtual objects without the need for physical contact, making the system more hygienic and reducing wear and tear on physical devices. The ability to interact with virtual objects using natural hand movements and gestures makes the system intuitive and easy to use. Further, based on processing of point clouds and/or voxel clouds, the method has a relatively low consumption of computational resources. Said point clouds and/or voxel clouds and preferably also the interaction may be performed on a GPU essentially avoiding excessive use of a CPU.

The method also opens up new possibilities for video games. With the proposed way of touchless interaction, game developers can create entirely new genres of games that leverage the user's natural movements. For example, players could cast spells in a fantasy game by making specific hand gestures or manipulate objects in a puzzle game by virtually picking them up and moving them around. This not only makes the games more immersive but also more physically engaging, potentially offering health benefits by encouraging movement. The method can be also used in educational settings to create interactive learning experiences. Students can engage with virtual models and simulations in a hands-on manner, making learning more engaging and effective.

Another significant advantage is the system's ability to provide intuitive interaction in real-time. The continuous capture of the movement and shape of the physical input object ensures that the virtual representation is always up-to-date, providing immediate feedback to the user. This real-time interaction is a big advantage for applications that require high precision and responsiveness. Users can interact with virtual objects as naturally as they would with physical ones, making the experience more seamless and immersive.

The method is also versatile enough to be used for controlling a computer device, such as a laptop, for tasks like drag and drop. This can be particularly useful in professional settings where hands-free operation can enhance productivity. For instance, a designer could manipulate 3D models on a screen without needing to use a mouse or keyboard, simply by moving their hands in front of a sensor. This can make the workflow more efficient and reduce the risk of repetitive strain injuries associated with prolonged use of traditional input devices.

Further, the method can be integrated into smart home systems, allowing users to control various devices and appliances through gestures. This can make home automation more intuitive and user-friendly. Further, the method can improve safety in industrial applications. In environments where physical contact with controls can be hazardous, touchless interaction provides a safer alternative. Workers can operate machinery or navigate interfaces without needing to touch potentially contaminated or dangerous surfaces. Further, the method can be used in healthcare settings for tasks such as manipulating medical images or controlling diagnostic equipment. This can reduce the risk of contamination and make procedures more efficient.

Further, the method can enhance remote collaboration. In a virtual meeting, participants can use touchless interaction to manipulate shared virtual objects, making the collaboration more interactive and engaging. This can be particularly useful for remote teams working on design or engineering projects.

It may be provided that, in case of a virtual representation getting near or into contact with a virtual object, an approaching or contacting area of the virtual representation is marked. The marking may be a coloring. For example, if the virtual representation corresponds to a user's hand being the physical input object, the user may move a virtual object using a fingertip. In such a case, the fingertip may be marked, e.g., by coloring the fingertip in red color. In case if marking is performed based on the virtual representation getting near a virtual object, a proximity threshold may be used to determine the distance between the virtual representation and the virtual object causing the marking. It may be provided that reducing the distance causes a change in the marking, e.g., a color becoming stronger and changing.

Providing markings to contacting areas of virtual representations may further enhance intuitiveness of the method. Further, the interaction becomes more precise due to a clear visualization of interactions.

It may be provided that the at least one virtual object is processed using a point cloud and/or voxel cloud.

Processing virtual objects using a point cloud may allow for highly detailed and accurate representations of the objects, enhancing the realism of the virtual environment. It may enable more precise interactions, as the detailed spatial data can be used to detect fine movements and gestures. Using point clouds and voxel clouds may also facilitate more complex interactions, as the detailed data can be used to simulate realistic physical behaviors, such as collision detection and object deformation. Additionally, the use of point clouds and voxel clouds may improve the scalability of the system, allowing it to handle a wide range of virtual objects with varying levels of complexity.

It may be provided that the first physical input object includes at least one user's body part, in particular a user's hand, wherein generating the first virtual representation and displaying the first virtual representation is performed without determining and/or estimating a pose of the at least one user's body part.

Throughout the present disclosure, the term "user's body part" may refer to any part of the user's body that is used as the physical input object in the touchless interaction system. Specific examples may include a hand, finger, arm, or head. The body part is tracked by the sensor means to capture its movement and shape for generating the virtual representation.

Throughout the present disclosure, the term "without determining and/or estimating a pose" may refer to the method of generating and displaying the virtual representation without calculating the specific orientation or position of the user's body part. This means that the system does not need to perform complex pose estimation algorithms, which can simplify the processing and reduce computational load. Rather, the main processing steps of method can be performed by a GPU. Specific examples may include directly using the raw sensor data, i.e., the point cloud and/or voxel cloud, to generate the virtual representation without intermediate steps of pose estimation.

This may lead to faster and more fluid interactions, enhancing the user experience. Additionally, avoiding pose estimation may reduce the complexity of the system, making it easier to implement and maintain. It may also improve the accuracy of the virtual representation, as pose estimation algorithms can introduce errors and inaccuracies.

It may be provided that the inter-action set of rules comprises adding virtual forces to the at least one virtual object, wherein the virtual forces may include a surface stabilization force facilitating a desired surface strength and/or a virtual gravity force.

Throughout the present disclosure, the term "virtual forces" may include simulated physical forces that act on virtual objects within the virtual environment. These forces are designed to mimic real-world physical forces, enhancing the realism and interactivity of the virtual objects. Specific examples may include forces such as gravity, friction, and elasticity, which can affect the movement, stability, and deformation of virtual objects.

Throughout the present disclosure, the term "surface stabilization force" may refer to a virtual force applied to a virtual object to maintain its surface strength and stability. This force may prevent the virtual object from deforming or collapsing under certain conditions, ensuring that it retains its desired shape and structural integrity. Specific examples may include forces that simulate the rigidity of a solid object or the elasticity of a flexible material, providing a realistic response to user interactions.

Throughout the present disclosure, the term "virtual gravity force" may include a simulated gravitational force that acts on virtual objects within the virtual environment. This force mimics the effect of real-world gravity, causing virtual objects to fall or remain grounded based on their weight and the gravitational pull. Specific examples may include forces that cause a virtual ball to drop when released or a virtual object to stay on a virtual surface, providing a realistic and intuitive interaction experience.

By adding virtual forces to the at least one virtual object, the system may enhance the realism and interactivity of the virtual environment, making it more engaging and immersive for users. The inclusion of a surface stabilization force may facilitate a desired surface strength, ensuring that virtual objects retain their shape and structural integrity during interactions. This may be particularly useful for applications requiring precise and stable virtual objects, such as virtual modeling or simulation. The addition of a virtual gravity force may provide a more intuitive and natural interaction experience, as users can interact with virtual objects in a manner consistent with real-world physics. This may improve the overall user experience, making the virtual environment more believable and enjoyable. Furthermore, the use of virtual forces may enable more complex and dynamic interactions, allowing users to manipulate virtual objects in various ways, such as lifting, dropping, or deforming them. This may expand the range of possible interactions and applications for the touchless interaction system. Additionally, the method may reduce the computational load by using predefined rules and algorithms to simulate physical forces, making the system more efficient and responsive. Finally, the method may be more accessible to users with varying levels of technical expertise, as the virtual forces provide a consistent and predictable behavior for virtual objects, simplifying the interaction process.

It may be provided that the inter-action set of rules comprises a momentum emulation model configured to cause movement of the at least one virtual object in response to the first virtual representation hitting the at least one virtual object, wherein the movement is an approximate modeling of the effect of a momentum, preferably including linear and/or angular momentum, that would have occurred if the first physical input object had hit a hypothetical physical object corresponding to the at least one virtual object. It may be further provided that the momentum emulation model determines the movement depending on a penetration depth with which a surface of the at least one virtual object is penetrated by the first virtual representation at the moment of the hit.

Throughout the present disclosure, the term "momentum emulation model" may include a computational model that simulates the effects of momentum on virtual objects when they are hit by the virtual representation of the physical input object. This model may calculate the resulting movement of the virtual objects based on the principles of linear and angular momentum. Specific examples may include models that simulate the motion of a virtual ball being struck by a virtual hand, causing it to roll or bounce, or the rotation of a virtual object when hit at an angle.

In the context of the momentum emulation model, linear momentum may determine the straight-line movement of virtual objects when they are hit by the virtual representation. Specific examples may include the forward motion of a virtual ball when pushed by a virtual hand or the sliding of a virtual object across a surface. In the context of the momentum emulation model, angular momentum may determine the rotational movement of virtual objects when they are hit by the virtual representation. Specific examples may include the spinning of a virtual top when struck by a virtual finger or the rotation of a virtual object when hit off-center.

Throughout the present disclosure, the term "penetration depth" may refer to the extent to which the surface of the virtual object is penetrated by the first virtual representation at the moment of the hit. This depth may influence the resulting movement of the virtual object, as deeper penetration may indicate a stronger impact. Specific examples may include the depth to which a virtual hand presses into a virtual sponge, affecting how the sponge deforms and moves, or the penetration depth of a virtual finger into a virtual button, determining the button's response.

By incorporating a momentum emulation model, the system may simulate realistic physical interactions between the virtual representation and virtual objects, enhancing the immersion and believability of the virtual environment. The inclusion of linear and angular momentum in the model may allow for more accurate and dynamic simulations of object movement, providing a more engaging user experience. Determining movement based on penetration depth may enable more nuanced and responsive interactions, as the system can adjust the resulting motion based on the strength and depth of the impact. This may improve the realism and interactivity of the virtual objects, making them behave in a manner consistent with real-world physics. Additionally, the momentum emulation model may facilitate more complex and varied interactions, allowing users to manipulate virtual objects in diverse ways, such as pushing, pulling, spinning, or throwing them. This may expand the range of possible applications for the touchless interaction system, from gaming and entertainment to virtual training and simulation. Furthermore, the method may reduce the computational load by using predefined models and algorithms to simulate momentum, making the system more efficient and responsive.

It may be provided that the inter-action set of rules comprises a deformation rule which defines if deformation of the at least one virtual object is possible, and if yes, to which extent.

Throughout the present disclosure, the term "deformation rule" may include a specific rule within the inter-action set of rules that determines whether a virtual object can change shape in response to interactions and, if so, to what extent the deformation occurs. This rule may define the conditions under which deformation is allowed and the parameters that control the extent of the deformation. Specific examples may include rules that allow a virtual sponge to compress when pressed by a virtual hand, or rules that enable a virtual rubber band to stretch when pulled by a virtual finger.

Throughout the present disclosure, the term "deformation" may refer to the change in shape or structure of a virtual object resulting from an interaction with the virtual representation. Deformation may include various types of shape changes, such as compression, stretching, bending, slicing, squeezing, or twisting. Specific examples may include the compression of a virtual cushion when sat upon by a virtual avatar, the stretching of a virtual elastic band when pulled, or the bending of a virtual metal rod when force is applied.

By incorporating a deformation rule within the inter-action set of rules, the system may enable more realistic and dynamic interactions with virtual objects, enhancing the immersion and believability of the virtual environment. The ability to define whether deformation is possible and to what extent may allow for more precise and controlled simulations of object behavior, providing a more engaging user experience. This may be particularly useful for applications requiring realistic material properties, such as virtual prototyping, where accurate deformation behavior is essential.

By defining the extent of deformation, the system may ensure that virtual objects behave in a manner consistent with their intended material properties. For example, a virtual rubber band may stretch significantly when pulled, while a virtual metal rod may only bend slightly under the same force. This level of detail may enhance the realism of the virtual environment, making interactions feel more natural and believable. The deformation rule may also improve the safety and usability of the virtual environment by preventing unrealistic or excessive deformations that could disrupt the user experience. For instance, a virtual object may be designed to deform only within certain limits to avoid breaking or behaving unpredictably. This controlled deformation may provide a more stable and reliable interaction experience, ensuring that virtual objects respond appropriately to user actions.

The method may include: in response to an interaction, in particular including a contact, between different virtual objects among the at least one virtual object, causing a movement and/or a shape change of the different virtual objects based on an intra-action set of rules.

Throughout the present disclosure, the term "intra-action set of rules" may refer to the predefined rules governing the interaction between different virtual objects within the virtual environment. These rules are essential for ensuring consistent and realistic behavior when virtual objects interact with each other, providing users with an intuitive and immersive experience. The intra-action set of rules may be implemented using algorithms and mathematical models that simulate real-world physics and interactions. Specific examples may include rules for collision detection, force application, and object deformation when virtual objects interact with each other.

Throughout the present disclosure, the term "movement" may refer to the change in position or orientation of virtual objects within the virtual environment. This movement may be caused by interactions such as collisions, forces, or user actions. Specific examples may include a virtual ball rolling across a virtual floor after being hit, or a virtual block sliding along a surface when pushed by another virtual object.

Throughout the present disclosure, the term "shape change" may refer to the alteration in the form or structure of virtual objects resulting from interactions. This shape change may include various types of deformations such as compression, stretching, bending, slicing, squeezing, or twisting.

By defining the interactions between different virtual objects, the system may ensure that virtual objects behave in a manner consistent with their intended properties and interactions. For example, a virtual ball may bounce off a virtual wall according to the rules of physics, while a virtual block may slide along a surface when pushed by another virtual object. This level of detail may enhance the realism of the virtual environment, making interactions feel more natural and believable.

It may be provided that the inter-action set of rules and the intra-action set of rules differ from each other.

By differentiating between the inter-action set of rules and the intra-action set of rules, the system may allow for more specialized and accurate simulations of interactions within the virtual environment. This differentiation may enable the system to handle interactions between the virtual representation and virtual objects differently from interactions between virtual objects themselves, providing a more nuanced and realistic experience. Additionally, having distinct sets of rules may improve the system's flexibility and adaptability, allowing it to be tailored to different applications and scenarios. For instance, in a virtual training environment, the inter-action set of rules may be designed to simulate the user's interactions with virtual tools, while the intra-action set of rules may govern the behavior of virtual components being assembled. This differentiation may provide a more accurate and effective training experience, as each type of interaction can be optimized for its specific context.

Furthermore, the method may reduce the computational load by allowing the system to apply the appropriate set of rules for each interaction, rather than using a single, more complex set of rules for all interactions. This may make the system more efficient and responsive, improving the user experience.

By ensuring that the inter-action set of rules and the intra-action set of rules differ from each other, the system may provide a more realistic and engaging virtual environment. This differentiation may enhance the believability of the virtual objects and interactions, making them behave in a manner consistent with their intended properties and contexts. The distinct sets of rules may also improve the safety and usability of the virtual environment by preventing unrealistic or excessive interactions that could disrupt the user experience It may be provided that the inter-action set of rules comprises adding virtual forces to the at least one virtual object, wherein the virtual forces may include a force which avoids deformation of surfaces of the at least one virtual object if virtual objects hit each other and/or a virtual gravity force.

Throughout the present disclosure, the term "force which avoids deformation of surfaces" may refer to a virtual force applied to a virtual object to maintain its surface integrity and prevent it from deforming when it interacts with other virtual objects. This force ensures that the virtual object retains its shape and structural integrity during interactions. Specific examples may include forces that simulate the rigidity of a solid object, preventing it from bending or compressing when hit by another virtual object.

By adding virtual forces to the at least one virtual object, the system may enhance the realism and interactivity of the virtual environment, making it more engaging and immersive for users. The inclusion of a force which avoids deformation of surfaces may ensure that virtual objects retain their shape and structural integrity during interactions, providing a more stable and predictable user experience. This may be particularly useful for applications requiring precise and stable virtual objects, such as virtual modeling or simulation. The addition of a virtual gravity force may provide a more intuitive and natural interaction experience, as users can interact with virtual objects in a manner consistent with real-world physics. This may improve the overall user experience, making the virtual environment more believable and enjoyable.

Furthermore, the method may enable more complex and dynamic interactions, allowing users to manipulate virtual objects in various ways, such as lifting, dropping, or colliding them. This may expand the range of possible interactions and applications for the touchless interaction system, from gaming and entertainment to virtual training and simulation. Additionally, the method may reduce the computational load by using predefined rules and algorithms to simulate physical forces, making the system more efficient and responsive.

By ensuring that virtual objects do not deform when they hit each other, the system may maintain the integrity and realism of the virtual environment. This may be particularly important for applications where the shape and structure of virtual objects are critical, such as virtual prototyping or architectural visualization. The virtual gravity force may also enhance the realism of the virtual environment by ensuring that virtual objects behave in a manner consistent with real-world physics. This may make interactions more intuitive and believable, improving the overall user experience. The combination of these virtual forces may provide a more immersive and engaging virtual environment, allowing users to interact with virtual objects in a natural and realistic manner.

It may be provided that the computer-implemented method of any one of the preceding claims, wherein the first point cloud and/or first voxel cloud is obtained or derived from the first sensor data, wherein preferably at least part of the sensor data forms the first point cloud and/or first voxel cloud.

By obtaining or deriving the first point cloud and/or first voxel cloud from the first sensor data, the system may ensure that the virtual representation of the physical input object is accurate and detailed. Further, it reduces the need for computational resources as the point cloud and/or voxel cloud may be provided from the sensor means. In particular, compared to pose estimation, the need for computational resources is much lower. Additionally, taking the point cloud and/or voxel cloud directly from the sensor data may enable real-time processing and with low latency. This may improve the responsiveness and interactivity of the system, providing a more engaging user experience.

It may be provided that the computer-implemented method of any one of the preceding claims, wherein displaying the first virtual representation includes graphical rendering, wherein the appearance of the displayed first virtual representation essentially corresponds to the appearance of the first physical input object. It may be further provided that graphical rendering involves adding sensor data captured by a color camera, in particular RGB camera, to the point cloud and/or voxel cloud.

Throughout the present disclosure, the term "graphical rendering" may include the process of generating a visual representation of the physical input object from the underlying sensor signals, in particular sensor data. This process may involve converting the point cloud or voxel cloud data into a visually coherent image that can be displayed on a screen. Specific examples may include rendering techniques such as shading, texturing, and lighting to enhance the realism and appearance of the virtual representation.

Throughout the present disclosure, the term "appearance of the displayed first virtual representation" may refer to the visual characteristics of the virtual representation, including its shape, color, texture, and overall look. The goal is to ensure that the virtual representation closely matches the appearance of the physical input object, providing a realistic and intuitive user experience. Specific examples may include a virtual hand that looks and moves like the user's real hand, or a virtual object that accurately reflects the physical object's color and texture.

Throughout the present disclosure, the term "sensor data captured by a color camera" may include the color information and visual details captured by, e.g., an RGB (Red, Green, Blue) camera. This data may be used to enhance the visual fidelity of the virtual representation by adding realistic colors and textures. Specific examples may include using RGB data to colorize a point cloud or voxel cloud, providing a more lifelike appearance for the virtual representation.

The inclusion of sensor data captured by an RGB camera in the graphical rendering process may further enhance the visual fidelity of the virtual representation. This may provide more detailed and realistic colors and textures, making the virtual environment more engaging and lifelike. The use of RGB data may also improve the accuracy of the virtual representation, as it can capture subtle visual details that may not be represented in the point cloud or voxel cloud alone. By ensuring that the graphical rendering process accurately reflects the appearance of the physical input object, the system may provide a more consistent and reliable user experience. This may improve the stability and predictability of the virtual environment, making interactions more controllable and intuitive. The detailed visual representation provided by graphical rendering may also enhance the overall user experience by providing a realistic and immersive virtual environment, allowing users to interact with virtual objects in a natural and intuitive manner.

It may be provided that causing a movement and/or a shape change is performed based on calculations which are essentially performed by a computer device's GPU.

Throughout the present disclosure, the term "calculations" may include the mathematical and computational processes required to determine the resulting movement and shape changes of virtual objects. These calculations may involve physics simulations, collision detection, force application, and deformation modeling. Specific examples may include calculating the trajectory of a virtual object based on applied forces, or determining the deformation of a virtual object based on its material properties and the applied pressure.

Throughout the present disclosure, the term "GPU" (Graphics Processing Unit) may refer to a specialized electronic circuit designed to accelerate the processing of images and calculations related to rendering and simulations. The GPU is particularly well-suited for parallel processing tasks, making it highly efficient for handling complex calculations required for real-time interactions in virtual environments. Specific examples may include GPUs from manufacturers like NVIDIA, AMD, or integrated GPUs within modern CPUs.

By performing the calculations for causing movement and/or shape changes using a computer device's GPU, the system may significantly enhance its computational efficiency and responsiveness. GPUs are optimized for parallel processing, allowing them to handle multiple calculations simultaneously, which may result in faster and more fluid interactions within the virtual environment. This may improve the overall user experience, making the virtual environment more engaging and immersive. Utilizing the GPU for these calculations may also free up the CPU (Central Processing Unit) to handle other tasks, such as managing input data, running application logic, and coordinating system resources. This division of labor may lead to better overall system performance and stability, ensuring that the touchless interaction system operates smoothly even under high computational loads. Furthermore, the use of the GPU may enable more complex and realistic simulations of physical behaviors, as the GPU can efficiently handle the intensive calculations required for advanced physics simulations. This may allow for more detailed and accurate interactions, such as realistic object collisions, precise force applications, and dynamic deformations. These enhanced simulations may make the virtual environment more believable and intuitive for users.

The method may reduce the overall computational load on the system by efficiently distributing tasks between the CPU and GPU. This optimized use of system resources may lead to better performance, lower power consumption, and increased longevity of the hardware. It may also make the system more accessible to users with varying levels of technical expertise, as the efficient processing provided by the GPU simplifies the interaction process and ensures a smooth and intuitive user experience.

It may be provided that the method is performed additionally by a second electronic device for facilitating collaborative interaction among users, wherein the first and second electronic devices are communicatively coupled to each other, optionally via a commonly used computer device and/or via a network connection. The second electronic device may perform obtaining, using a second touchless interaction system comprising second sensor means, second sensor data associated with a second physical input object, preferably a user's hand, wherein movement and shape of the second physical input object are continuously captured by the second sensor means and are included in the second sensor data. Further, it my perform generating, based on the second sensor data, a second virtual representation representing the second physical input object based on a second point cloud and/or second voxel cloud. Further, it may perform displaying, using a second display means, the first and second virtual representation and the at least one virtual object, wherein movement and shape of the second virtual representation correspond to the movement and shape of the second physical input object. Further, in response to an interaction, in particular including a contact, between the second virtual representation and the at least one virtual object, it may be performed causing a movement and/or a shape change of the at least one virtual object based on the inter-action set of rules. The first electronic device may display, in the step of displaying using a first display means, the first and second virtual representation and at least one virtual object.

Throughout the present disclosure, the term "second electronic device" may refer to additional hardware facilitating the method, similar to the first electronic device.

Throughout the present disclosure, the term "collaborative interaction" may include interactions involving multiple users, where each user can interact with the virtual objects by using physical input objects, i.e., causing interaction involving also other user's virtual representations. This may involve sharing a common virtual space and performing coordinated actions. Specific examples may include collaborative design, virtual meetings, and multiplayer gaming.

Throughout the present disclosure, the term "communicatively coupled" may refer to the connection between the first and second electronic devices, allowing them to exchange data and synchronize their operations. This connection may be established via a commonly used computer device or a network connection. Specific examples may include wired connections, wireless connections, and internet-based connections.

By facilitating collaborative interaction involving more than only one user, the system may enable multiple users to interact with the virtual environment, i.e., with commonly used and displayed virtual object, and with each other in real-time, enhancing the social and collaborative aspects of the experience. This may be particularly useful for applications such as virtual meetings, collaborative design, and multiplayer gaming.

It may be provided, in response to an interaction, in particular including a contact, between the first virtual representation and the second virtual representation, causing one of the following: in a first mode of collaboration, ignoring said interaction; and/or in a second mode of interaction, causing movement and/or a shape change of the first virtual representation and/or the second virtual representation, preferably based on collaboration set of rules; optionally, wherein switching between the first mode of collaboration and second mode of collaboration is provided, wherein switching may be triggered by a user input.

Throughout the present disclosure, the term "first mode of collaboration" may refer to a mode of operation where interactions between the first virtual representation and the second virtual representation are ignored. This means that any contact or engagement between the two virtual representations does not result in any movement or shape change. Specific examples may include a virtual meeting where each user's actions are independent of each other, allowing for parallel interactions without direct interference. Of course, indirect inference by both virtual representations interacting with the same virtual object, may be possible.

Throughout the present disclosure, the term "second mode of interaction" may include a mode of operation where interactions between the first virtual representation and the second virtual representation cause movement and/or shape changes.

Throughout the present disclosure, the term "collaboration set of rules" may refer to predefined rules that govern the interactions between the first virtual representation and the second virtual representation in the second mode of interaction. These rules ensure consistent and realistic behavior during collaborative actions. Specific examples may include rules for sharing control of virtual objects, synchronizing movements, and resolving conflicts between user actions.

Throughout the present disclosure, the term "switching" may refer to the ability to change between the first mode of collaboration and the second mode of interaction. This switching may be triggered by a user input, allowing users to dynamically choose the mode of operation based on their needs. Specific examples may include a button press, voice command, or gesture that toggles between the modes.

By allowing interactions between the first virtual representation and the second virtual representation to be ignored in the first mode of collaboration, the system may enable parallel and independent actions by multiple users, reducing interference and enhancing productivity. This may be particularly useful in scenarios where users need to act independently, i.e., interact with virtual objects independently.

According to a second aspect of the present invention, it may be provided a data processing apparatus, preferably an electronic device, more preferably a computer device, comprising means for carrying out the method according to the first aspect of the invention.

According to a third aspect of the present invention, it may be provided a computer program or a computer-readable medium having stored thereon the computer program, the computer program comprising instructions which, when the computer program is executed by a data processing apparatus, in particular according to the second aspect of the invention, cause the data processing apparatus to carry out the method according to the first aspect of the invention.

All features, technical implementation details and advantages described with respect to any one of the aspects of the present invention described herein are self-evidently mutatis mutandis applicable for any one of the other aspects of the present invention and vice versa.

### BRIEF DESCRIPTION OF THE DRAWINGS

The disclosure may be better understood by reference to the following drawings:
- Figure 1:: A flow chart including steps in accordance with embodiments of the present disclosure.
- Figure 2: An exemplary usage scene of a method according to embodiments of the present disclosure.
- Figure 3: A further exemplary usage scene of a method according to embodiments of the present disclosure.
- Figure 4: A further exemplary usage scene of a method according to embodiments of the present disclosure.
- Figure 5: A further exemplary usage scene of a method according to embodiments of the present disclosure.
- Figure 6: A further exemplary usage scene of a method according to embodiments of the present disclosure.
- Figure 7: A further exemplary usage scene of a method according to embodiments of the present disclosure.
- Figure 8: A further exemplary usage scene of a method according to embodiments of the present disclosure.
- Figure 9: A schematic illustration of a usage scenario of a method according to embodiments of the present disclosure.
- Figure 10: A further exemplary usage scene of a method according to embodiments of the present disclosure.
- Figure 11: A further exemplary usage scene of a method according to embodiments of the present disclosure.
- Figure 12: A further exemplary usage scene of a method according to embodiments of the present disclosure.
- Figure 13: A further exemplary usage scene of a method according to embodiments of the present disclosure.
- Figure 14: A further exemplary usage scene of a method according to embodiments of the present disclosure.
- Figure 15: A further exemplary usage scene of a method according to embodiments of the present disclosure.
- Figure 16: A further exemplary usage scene of a method according to embodiments of the present disclosure.
- Figure 17: A further exemplary usage scene of a method according to embodiments of the present disclosure.
- Figure 18: A further exemplary usage scene of a method according to embodiments of the present disclosure.
- Figure 19: A further exemplary usage scene of a method according to embodiments of the present disclosure.

### DETAILED DESCRIPTION

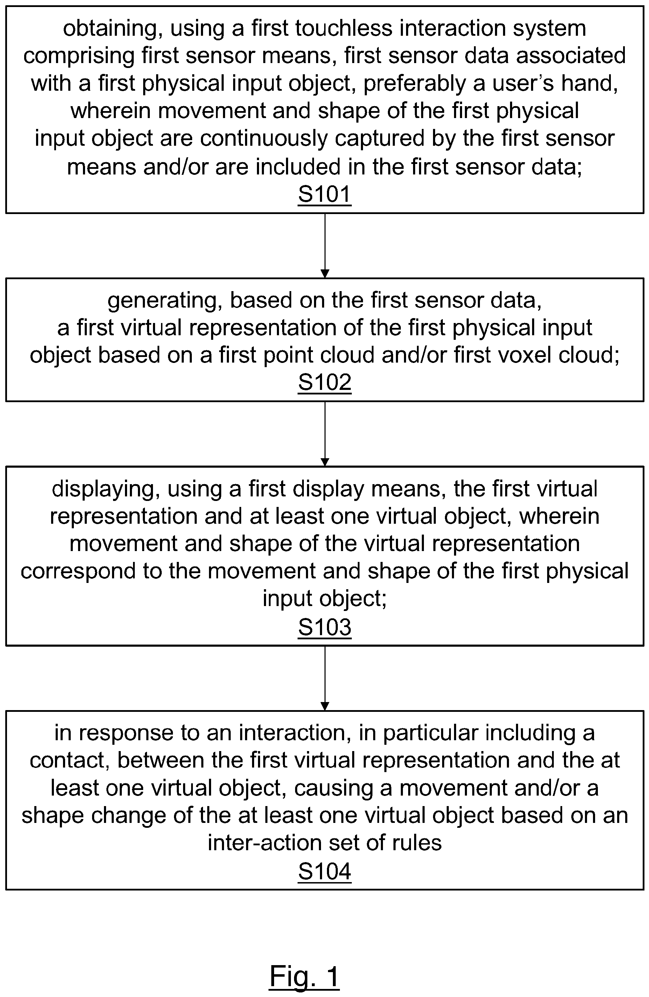

Figure 1 is a flowchart including steps according to embodiments of the present disclosure. Step S101 includes obtaining, using a first touchless interaction system comprising first sensor means, first sensor data associated with a first physical input object, preferably a user's hand, wherein movement and shape of the first physical input object are continuously captured by the first sensor means and/or are included in the first sensor data. Step S102 includes generating, based on the first sensor data, a first virtual representation of the first physical input object based on a first point cloud and/or first voxel cloud. Step S103 includes displaying, using a first display means, the first virtual representation and at least one virtual object, wherein movement and shape of the virtual representation correspond to the movement and shape of the first physical input object. Step S104 includes, in response to an interaction, in particular including a contact, between the first virtual representation and the at least one virtual object, causing a movement and/or a shape change of the at least one virtual object based on an inter-action set of rules

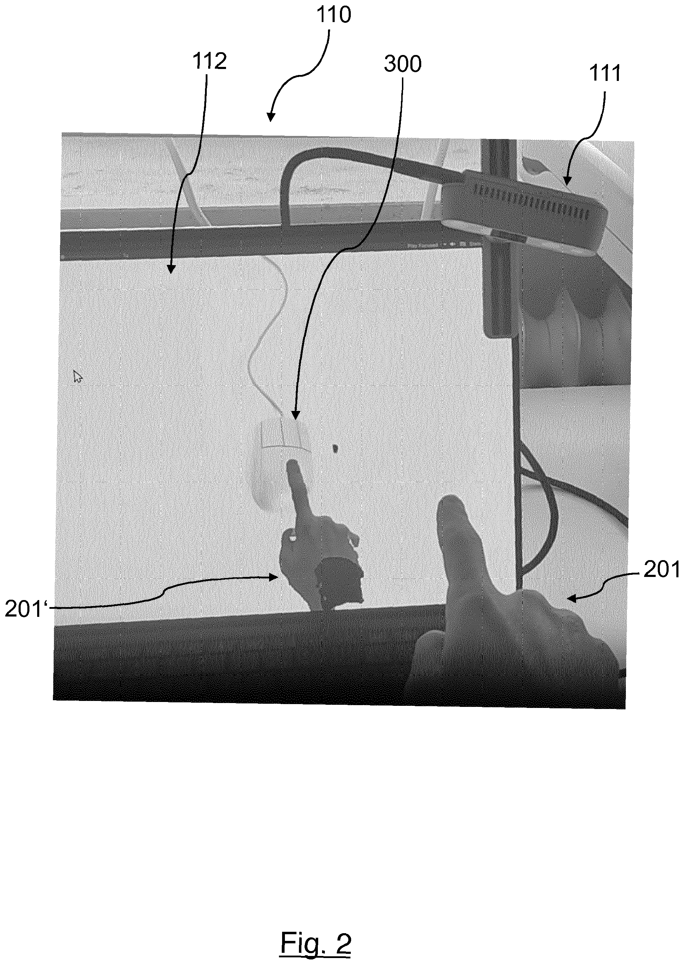

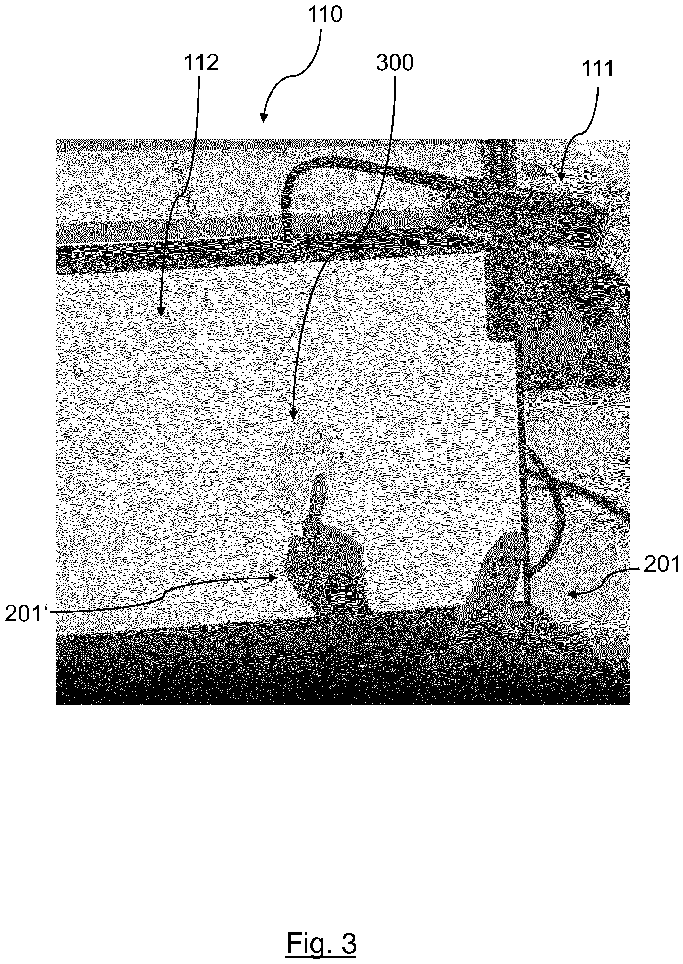

Figures 2 and 3 show sequential situations in which a user's hand being the first physical input object 201 is translated into a first virtual representation 201' being displayed in real-time by the first display means 112 of the electronic device 110. For this purpose, the user's hand is tracked by the first touchless interaction system 111. The first touchless interaction system 111 may include a depth camera and a RGB camera, wherein the image date obtained by the two cameras are overlayed in order to generate an immersive scene on the display means 112, i.e., making the first virtual representation 201 representing the user's hand as realistic as possible. Further, the display means 112 displays a virtual computer mouse being a virtual object 300. The virtual computer mouse 300 and the first virtual representation 201' interact according to inter-action set of rules. From figure 2 to figure 3, the computer mouse is moved to the right by the first virtual representation 201' based on a detection of a movement of the user's hand.

In other words: In reality, a user's hand would control a computer mouse physically. The physical interaction would follow the rules of physics. In the illustrated scene of figures 2 and 3, the user's hand interacts with a virtual computer mouse via the first virtual representation 201'. For that, inter-action rules are used which are configured to emulate reality and make the interaction feel as intuitive and realistic as possible.

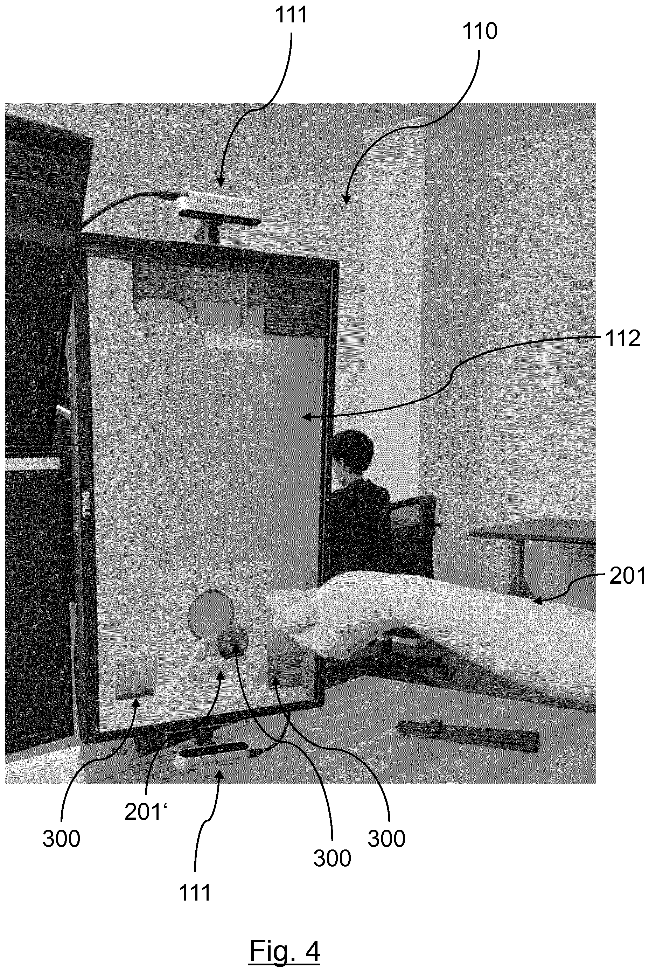

Figure 4 illustrates a one-hand interaction of a user using the hand as a first physical input object 201 which is translated into a first virtual representation 201'. The virtual objects 300 may be randomly generated in a upper area of the displayed scene and fall down according to the laws of gravity which may be part of inter-action set of rules and/or intra-action set of rules. In the shown example, the virtual objects 300 include a ball, a cylinder and a dice.

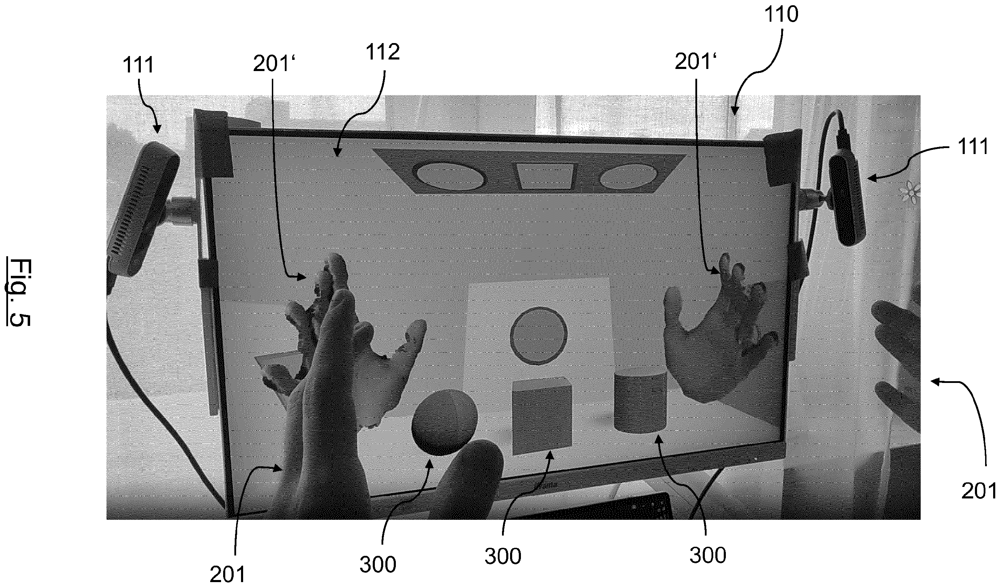

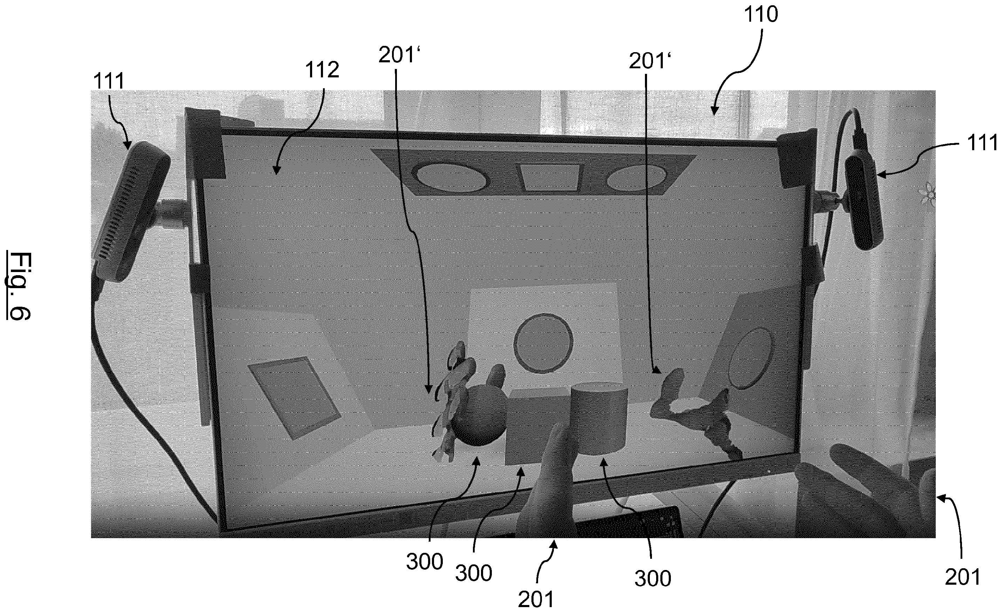

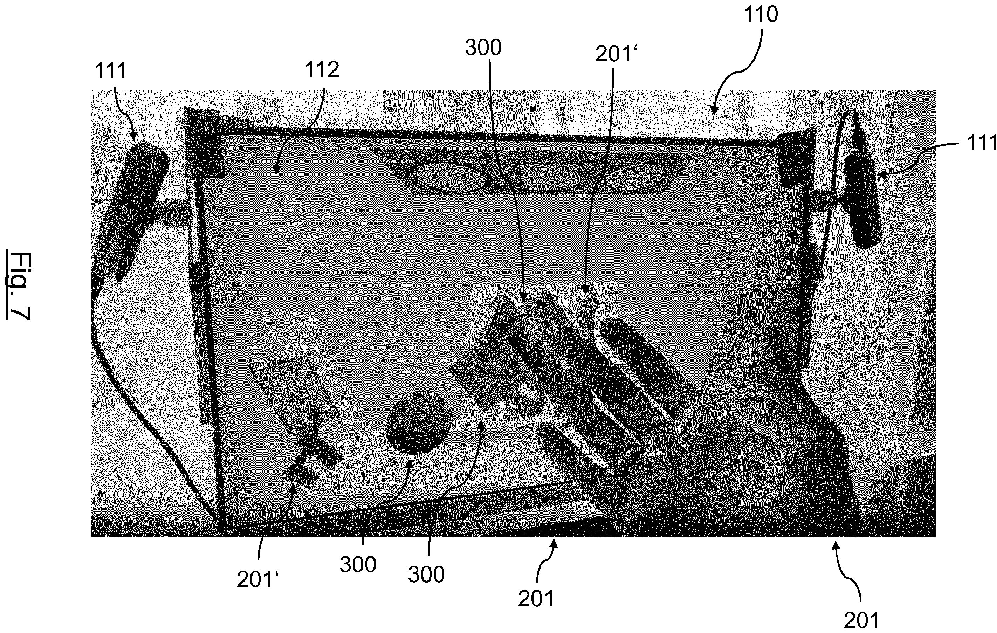

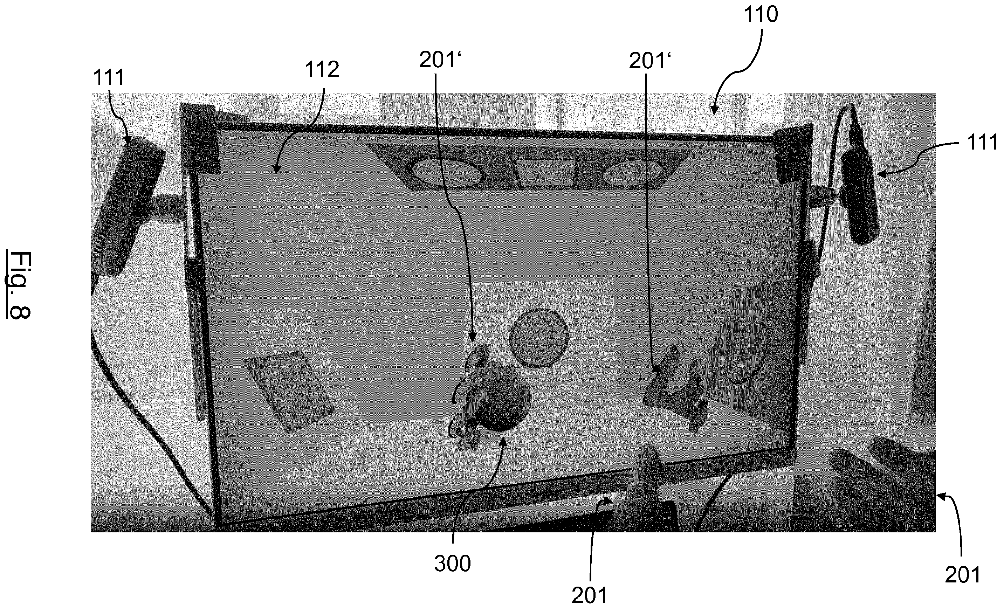

Figure 5-8 illustrate various scenes of interaction according to embodiments of the present disclosure. As shown in figures 6 and 8, a contacting area of the first virtual representation 201' and/or of the respectively contacted virtual object 300 may be colored differently, e.g., in red, in order to provide contact area information to the user for enhancing intuitiveness of interaction.

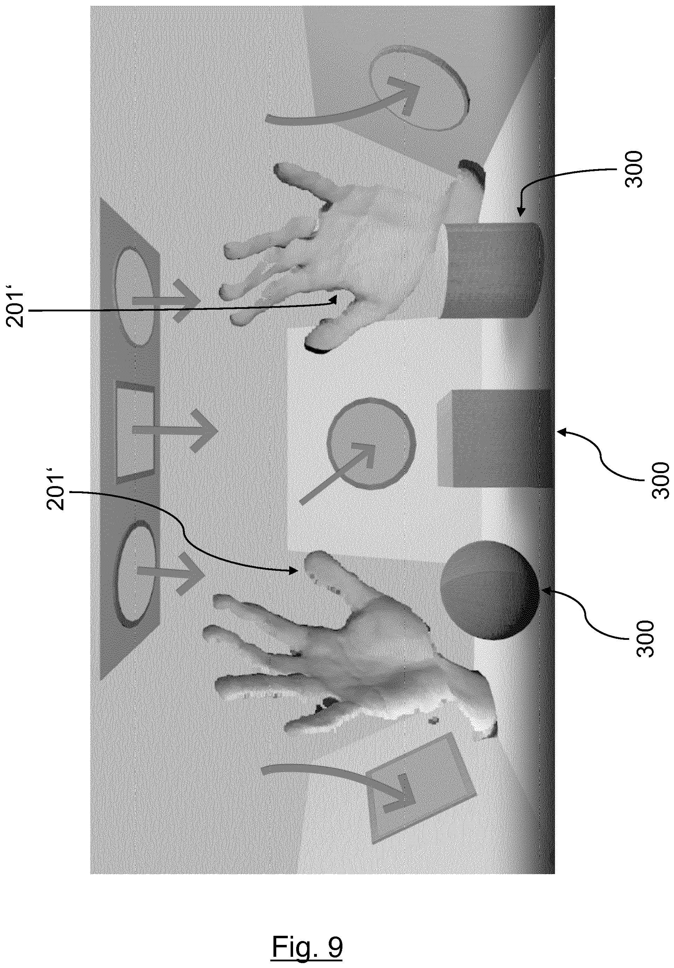

In figure 9, an initial introduction scene for a game is shown including arrows showing where virtual objects 300 are coming from (here: from the top) and where the user should put the virtual objects 300 using the first physical input object 201 and the first virtual representation 201'.

It is self-evident that the term "first" as used for example in the expressions "first physical input object" or "first virtual representation" does not mean that the first physical input object 201 of the first virtual representation 201' includes only one element. Rather, a first physical input object 201 may include both handy of a user and of other body parts of the user. Accordingly, the first virtual representation 201' may include representations of more than only one body part of the user.

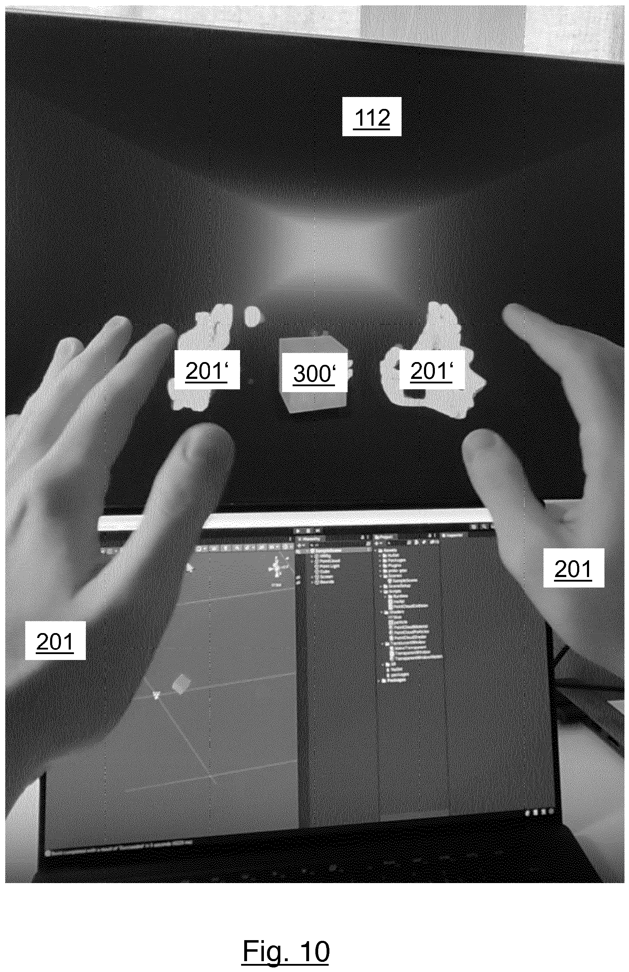

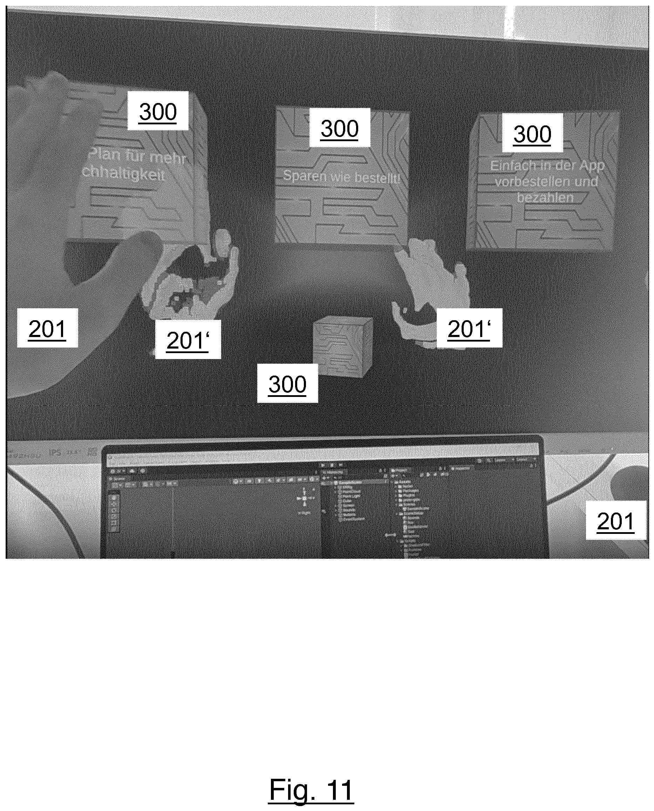

Figures 10 and 11 show scenes where the first touchless interaction system 111 does comprise an RGB camera but only a depth camera, or where data from the RGB camera is not used for coloring the first virtual representation 201'.

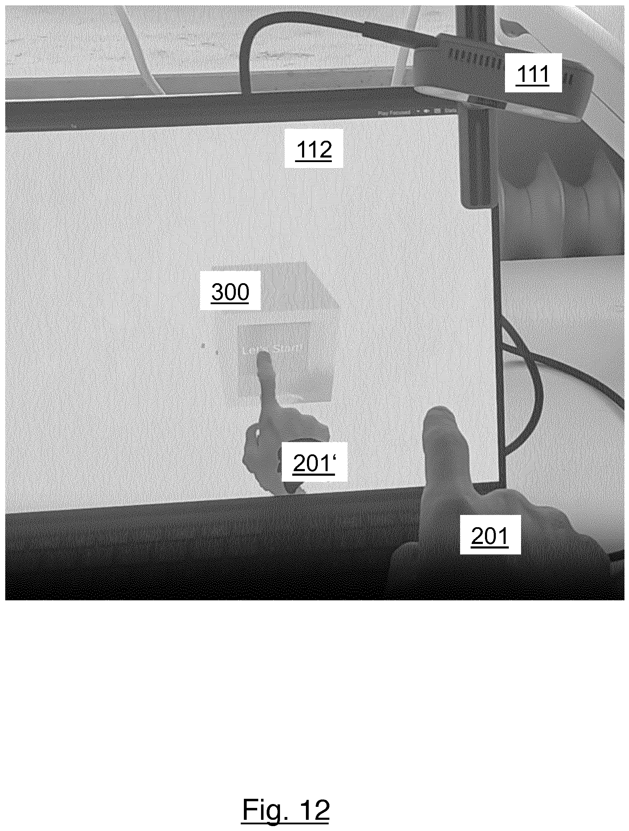

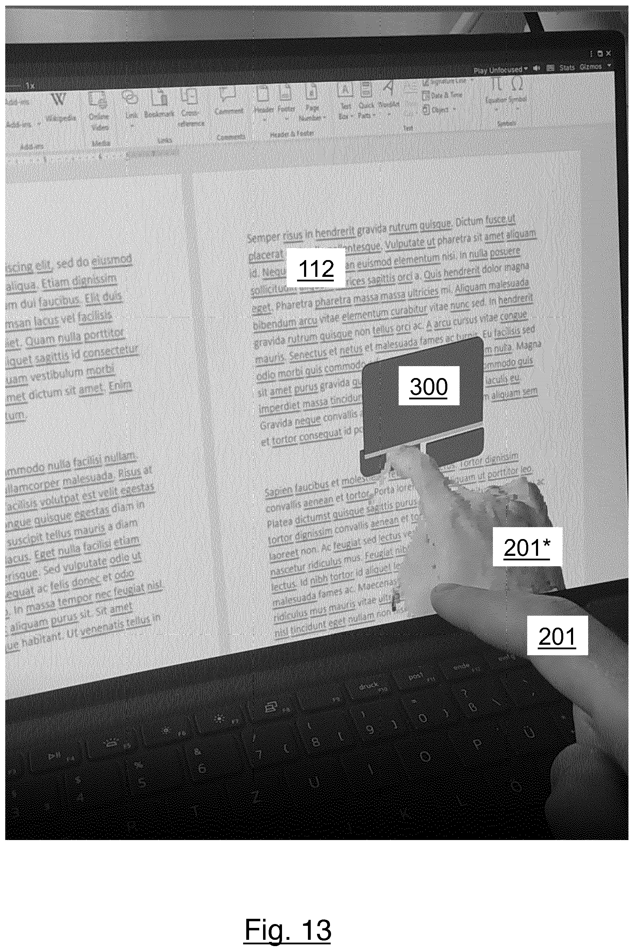

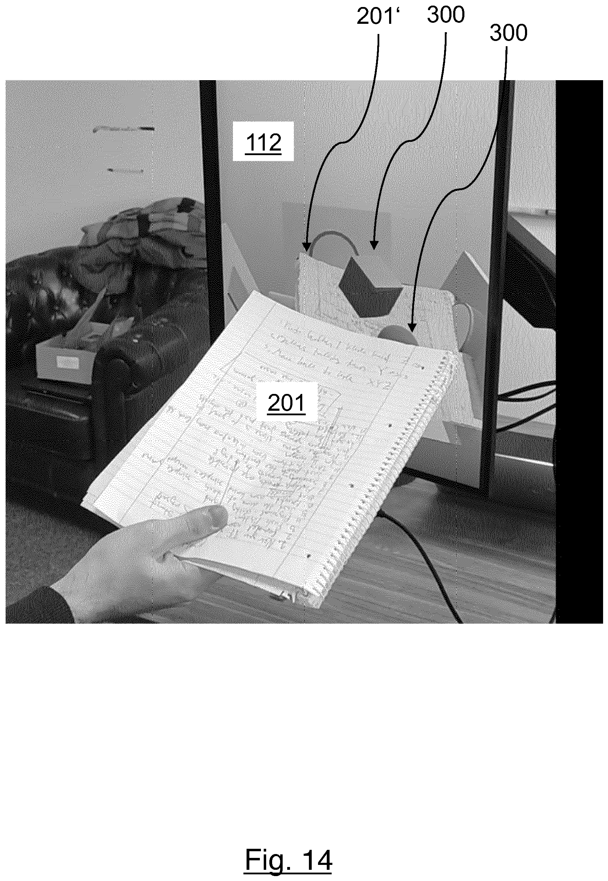

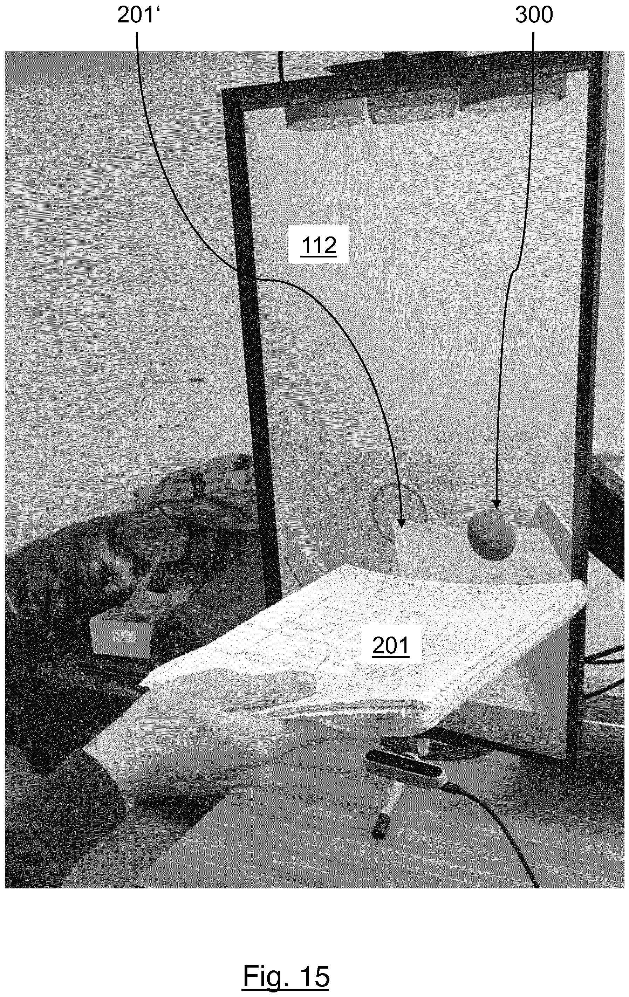

Figure 12 shows a scene where the virtual object 300 is a button to be pressed by a user. Figure 13 shows a scene where the virtual object 300 is a touchpad to be controlled by a user. Figures 14 and 15 illustrate scenes where a object other than a body part of a user is used as a first physical input object 201.

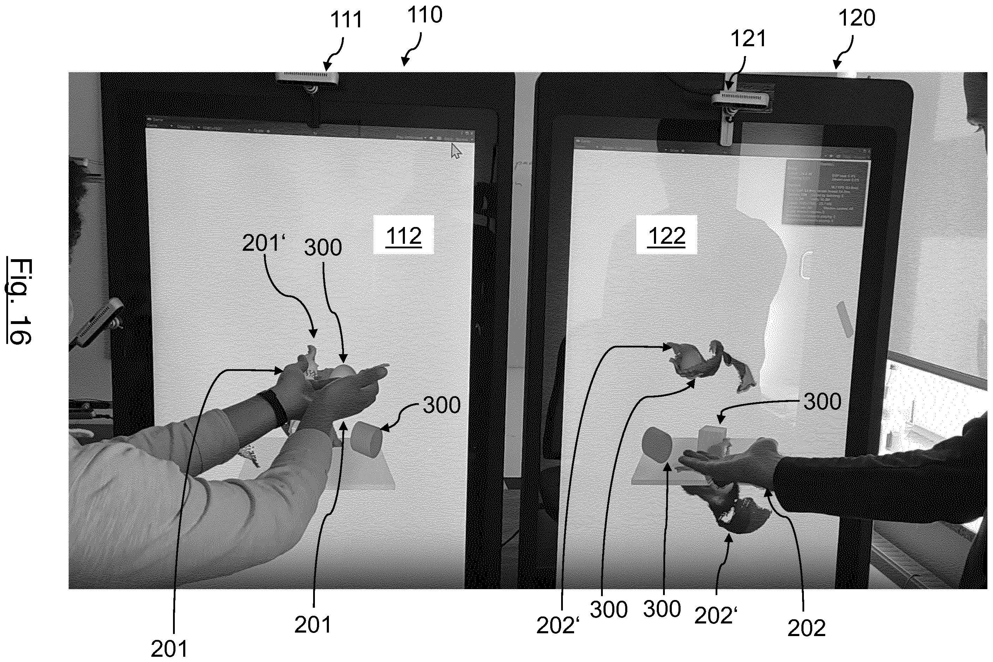

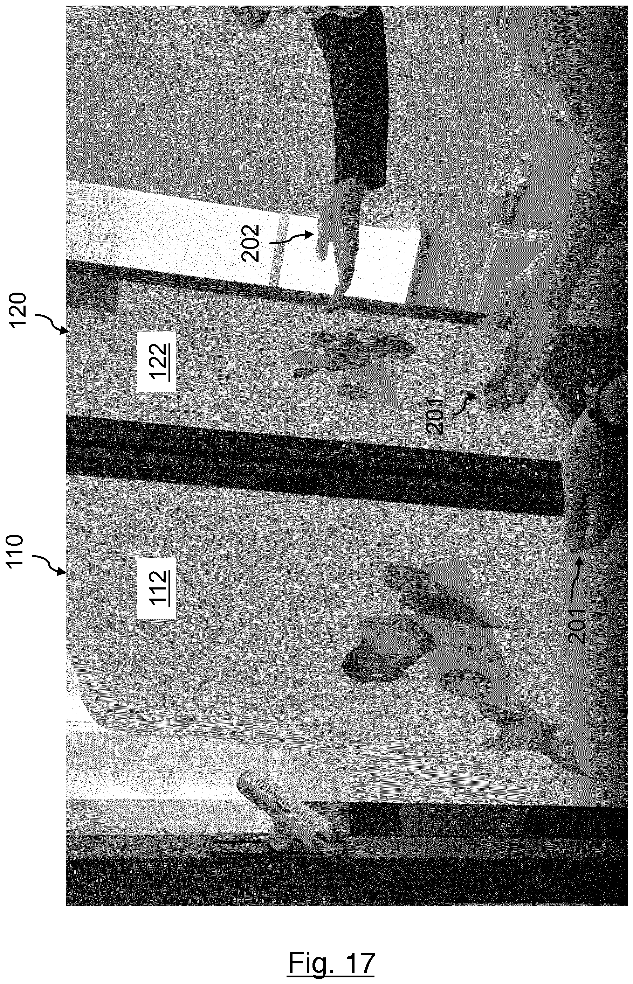

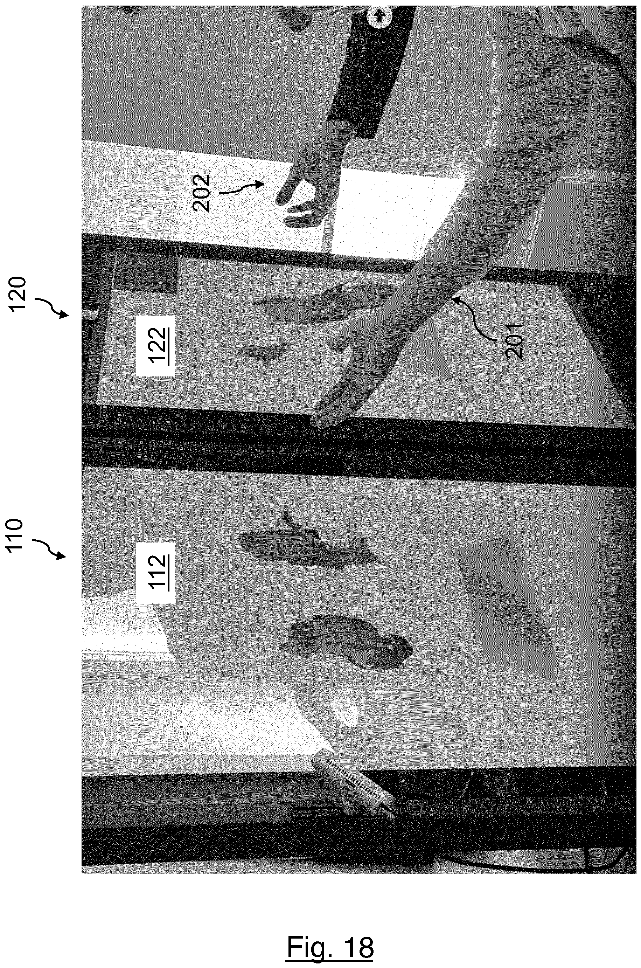

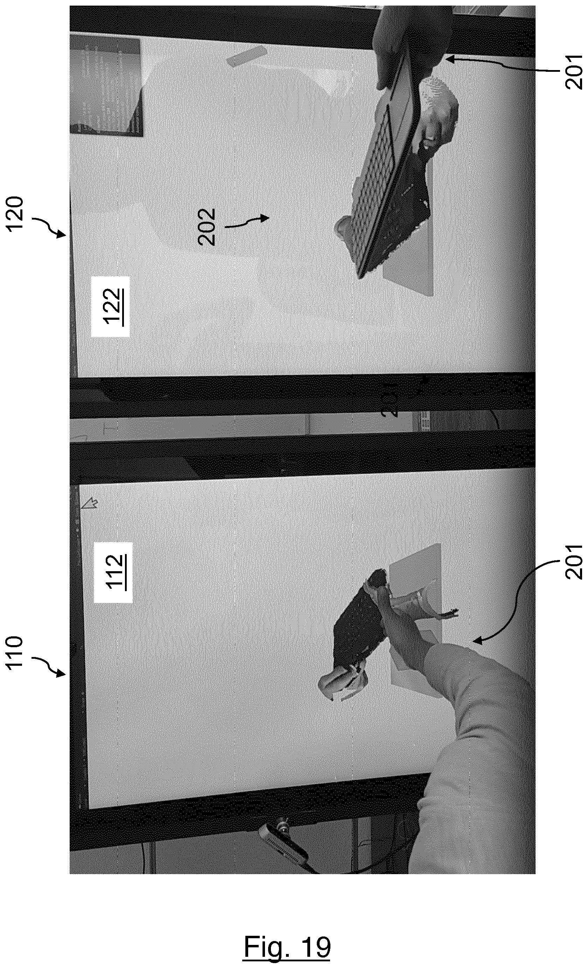

Figure 16-19 show scenes where a first electronic device 110 and a second electronic device 120 are involved. Different users interact in a same virtual space with same virtual objects 300. It may be provided that there are special virtual objects 300 that are shown only on the first electronic device 110, i.e., on the respective first display means 112.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 110: first electronic device
- 120: second electronic device
- 111: first touchless interaction system
- 121: second touchless interaction system
- 112: first display means
- 122: second display means
- 201: first physical input object[s]
- 202: second physical input object[s]
- 201': first virtual representation
- 202': second virtual representation
- 300: virtual object[s]
- S101-S104: method steps

## Claims

1. A computer-implemented method for touchless interaction among physical input objects (201, 202) and virtual objects (300), the method being performed by a first electronic device (110), comprising:
obtaining (S101), using a first touchless interaction system (111) comprising first sensor means, first sensor data associated with a first physical input object (201), preferably a user's hand, wherein movement and shape of the first physical input object (201) are continuously captured by the first sensor means;
generating (S102), based on the first sensor data, a first virtual representation (201') of the first physical input object (201) based on a first point cloud and/or first voxel cloud;
displaying (S103), using a first display means (112), the first virtual representation (201') and at least one virtual object (300), wherein movement and shape of the first virtual representation (201') correspond to the movement and shape of the first physical input object (201); and
in response to an interaction, in particular including a contact, between the first virtual representation (201') and the at least one virtual object (300), causing (S104) a movement and/or a shape change of the at least one virtual object (300) based on an inter-action set of rules.

2. The computer-implemented method of claim 1, wherein the at least one virtual object (300) is processed using a point cloud and/or voxel cloud.

3. The computer-implemented method of any one of the preceding claims, wherein the first physical input object (201) includes at least one user's body part, in particular a user's hand, wherein generating the first virtual representation (201') and displaying the first virtual representation (201') is performed without determining and/or estimating a pose of the at least one user's body part.

4. The computer-implemented method of any one of the preceding claims, wherein the inter-action set of rules comprises adding virtual forces to the at least one virtual object (300), wherein the virtual forces may include a surface stabilization force facilitating a desired surface strength and/or a virtual gravity force.

5. The computer-implemented method of any one of the preceding claims, wherein the inter-action set of rules comprises a momentum emulation model configured to cause movement of the at least one virtual object (300) in response to the first virtual representation (201') hitting the at least one virtual object (300), wherein the movement is an approximate modelling of the effect of a momentum, preferably including linear and/or angular momentum, that would have occurred if the first physical input object (201) had hit a hypothetical physical object corresponding to the at least one virtual object (300);
optionally, wherein the momentum emulation model determines the movement depending on a penetration depth with which a surface of the at least one virtual object (300) is penetrated by the first virtual representation (201') at the moment of the hit.

6. The computer-implemented method of any one of the preceding claims, wherein the inter-action set of rules comprises a deformation rule which defines if deformation of the at least one virtual object (300) is possible, and if yes, to which extent.

7. The computer-implemented method of any one of the preceding claims, further comprising:
in response to an interaction, in particular including a contact, between different virtual objects among the at least one virtual object (300), causing a movement and/or a shape change of the different virtual objects based on an intra-action set of rules.

8. The computer-implemented method of claim 7, wherein the inter-action set of rules and the intra-action set of rules differ from each other.

9. The computer-implemented method of any one of claims 7-8, wherein the inter-action set of rules comprises adding virtual forces to the at least one virtual object (300), wherein the virtual forces may include a force which avoids deformation of surfaces of the at least one virtual object (300) if virtual objects (300) hit each other and/or a virtual gravity force.

10. The computer-implemented method of any one of the preceding claims, wherein the first point cloud and/or first voxel cloud is obtained or derived from the first sensor data, wherein preferably at least part of the sensor data forms the first point cloud and/or first voxel cloud.

11. The computer-implemented method of any one of the preceding claims, wherein displaying the first virtual representation (201') includes graphical rendering, wherein the appearance of the displayed first virtual representation (201') essentially corresponds to the appearance of the first physical input object (201);
optionally, wherein graphical rendering involves adding sensor data captured by an RGB camera to the point cloud and/or voxel cloud.

12. The computer-implemented method of any one of the preceding claims, the method being performed additionally by a second electronic device (120) for facilitating collaborative interaction among users, wherein the first and second electronic devices (120) are communicatively coupled to each other, optionally via a commonly used computer device and/or via a network connection, wherein the second electronic device performs:
obtaining, using a second touchless interaction system (121) comprising second sensor means, second sensor data associated with a second physical input object (202), preferably a user's hand, wherein movement and shape of the second physical input object (202) are continuously captured by the second sensor means and are included in the second sensor data;
generating, based on the second sensor data, a second virtual representation (202') representing the second physical input object (202) based on a second point cloud and/or second voxel cloud;
displaying, using a second display means (122), the first and second virtual representation (202') and the at least one virtual object (300), wherein movement and shape of the second virtual representation correspond to the movement and shape of the second physical input object (202); and
in response to an interaction, in particular including a contact, between the second virtual representation (202') and the at least one virtual object (300), causing a movement and/or a shape change of the at least one virtual object (300) based on the inter-action set of rules;
wherein the first electronic device displays, in the step of displaying (S103) using a first display means (112), the first and second virtual representation (202') and at least one virtual object (300).

13. The computer-implemented method of claim 12, wherein in response to an interaction, in particular including a contact, between the first virtual representation (201') and the second virtual representation (202'), causing one of the following:
in a first mode of collaboration, ignoring said interaction; and/or
in a second mode of interaction, causing movement and/or a shape change of the first virtual representation (201') and/or the second virtual representation (202'), preferably based on collaboration set of rules;
optionally, wherein switching between the first mode of collaboration and second mode of collaboration is provided, wherein switching may be triggered by a user input.

14. A data processing apparatus, preferably an electronic device, more preferably a computer device, comprising means for carrying out the method of any one of claims 1-12.

15. A computer program or a computer-readable medium having stored thereon the computer program, the computer program comprising instructions which, when the computer program is executed by a data processing apparatus, cause the data processing apparatus to carry out the method of any one of claims 1-12.
